Europäisches Patentamt

(19) European Patent Office

Office européen des brevets

(11) Publication number: **0 384 590**
**A2**

## EUROPEAN PATENT APPLICATION

(21) Application number: 90300986.8

(22) Date of filing: 31.01.90

(51) Int. Cl.5: **G06K 15/22, B43K 21/033**

(30) Priority: 23.02.89 US 314618

(43) Date of publication of application:
**29.08.90 Bulletin 90/35**

(84) Designated Contracting States:
**DE FR GB IT**

(71) Applicant: **Hewlett-Packard Company**
**3000 Hanover Street**
**Palo Alto California 94304(US)**

(72) Inventor: **Ranta,Ray R.**
**4358 40th Street**
**San Diego,California 92105-1019(US)**
Inventor: **Puyot,Michael A.**
**1133 Jackson Place**
**Escondido,California 92076(US)**
Inventor: **Halpenny,Thomas**
**1840 Bello Hills Lane**
**Escondido,California 92026(US)**

(74) Representative: **Colgan, Stephen James et al**
**CARPMAELS & RANSFORD 43 Bloomsbury**
**Square**
**London WC1A 2RA(GB)**

(54) **Mechanical plotter pencil and methods of advancing lead therein.**

(57) A mechanical pencil (10) for a plotter, and lead advance methods for use with a mechanical pencil employed in such plotters. A mechanical pencil (10) is modified and adapted for use in an existing plotter. The modified pencil (10) applies 100% of the available down force provided by the plotter on the pencil lead (14). A pencil body (11) adapted for use with the plotter is provided, along with a knocking disk (17) and tube (16) arrangement located at the top end of the pencil (10) for advancing of the lead (14). A different embodiment of the pencil (10) permits the use of small diameter lead (14). This is accomplished by the use of an improved floating collar (40) comprising a small diameter tube (42) within the collar (40) that supports the small diameter lead (14) during writing operations. This arrangement prevents side loading of the collar (10), and hence minimizes lead breakage. A spring-loaded collet arrangement (25-39) is disposed in the lower portion of the pencil body (11) and is employed to advance the lead (14) in response to operation of the knocking disk (17) and tube (16) arrangement. In the preferred lead advance method, a vertical axis encoder sensor is used to measure the length of lead in the pencil (10). If the lead (14) length falls below a predetermined threshold, the plotting operation currently in progress is suspended and the lead (14) in the pencil is advanced. After the lead-advancing operation has been satisfactorily concluded, the plotting operation is resumed at the point at which it was interrupted. In a second method, a different lead advance algorithm employing a variety of lead advance routines monitors and controls the lead dispensing process. The algorithm employs six routines which allow the algorithm to accurately predict and control future lead usage.

Fig 3

# MECHANICAL PLOTTER PENCIL AND METHODS OF ADVANCING LEAD THEREIN

## BACKGROUND OF THE INVENTION

The present invention relates to mechanical pencils for plotters, and more particularly to lead advance methods for use with such mechanical pencils employed in such plotters.

Two known plotter pencils are those employed in the Mutoh model ip-5XX plotter, and a pencil employed in the model GD9011E plotter distributed by Graftek. The Mutoh pencil is a ceramic-tipped, counter-force type pencil. A disadvantage of this type pencil is that the counter-force varies considerably as lead is used, and directly reduces the force available to the lead for producing dark lines.

The Graftek pencil is a tip-advance type plotter pencil. A disadvantage of this pencil is that it has an accuracy and repeatability problem with respect to the lines drawn by the pencil. In addition, a complicated mechanism is needed to advance the lead. In particular, a plate must swing under the pencil during the lead-advancing operation.

## SUMMARY OF THE INVENTION

The pencil of the present invention is a mechanical pencil adapted for use with a plotter. The pencil includes a body having a generally conical tip through which pencil lead protrudes. The body has a flange extending around its circumference that is employed to grip and register the pencil in the plotter. A spring advance mechanism is disposed in the lower portion of the pencil body. A knocking disk arrangement disposed at the upper portion of the body of the pencil includes a tube member coupled to the spring advance mechanism to permit remote operation thereof. The pencil of the present invention allows 100% of the available down force provided by the plotter to be exerted on the pencil lead. The pencil is specifically adapted for use with a Hewlett-Packard Draftmaster plotter, for example, but with more engineering, other plotters could be adapted to use the pencil.

In a different embodiment of the pencil, the pencil tip is modified to permit the use of very small diameter lead. This pencil arrangement employs an improved floating collar comprising a slidable tube closely fitted to the pencil body that supports the small diameter lead during writing operations. In addition, an inner tube also supports the lead as closely as possible to the floating collar so that the lead does not break inside the pencil. This close fitting arrangement holds the lead concentric to the pencil. One purpose of the floating collar is to keep the lead protruding beyond the pencil as short as possible. Short lengths of lead are less susceptible to side load breakage during writing than long lengths of lead.

In accordance with one method of the present invention, an existing computer-controlled plotter is adapted to use the above-described mechanical pencil. A Z-axis (vertical axis) encoder sensor of the existing plotter is calibrated and is used to measure the length of lead in the pencil during writing operations. If the lead length falls below a predetermined threshold, the plotter suspends the plotting operation currently in progress and advances the lead in the pencil. After the lead-advancing operation has been satisfactorily concluded, the plotting operation is resumed at the point at which it was interrupted.

In a second alternative method, a lead advance algorithm employing a variety of lead advance routines monitors and controls the lead dispensing process. The algorithm employs six routines with startup, progressive, current, historical, lead advance OK and lead advance failure controls. These six routines allow the algorithm to accurately predict and control future lead usage.

## BRIEF DESCRIPTION OF DRAWINGS

The foregoing and other features of the present invention will be more readily understood with reference to the following detailed description, taken in conjunction with the accompanying drawings, wherein like reference numerals designate like structural elements, and in which:

Fig. 1 is a perspective view of a mechanical pencil modified in accordance with the present invention;

Fig. 2 is a side view of the modified mechanical pencil of Fig. 1;

Fig. 3 is a view of a plotter carriage holding the mechanical pencil of Fig. 1 in accordance with the present invention;

Fig. 4 is an exploded view of a different embodiment of the pencil modified for use with small diameter lead;

Fig. 5 is a flow chart illustrating an alternative method of advancing lead in a plotter pencil; and

Fig. 6 is a flow chart illustrating routines for determining the lead advance writing distance utilized in the method of Fig. 5.

## DETAILED DESCRIPTION

The mechanical pencil of the present invention is designed for use with existing computer-controlled digital plotters, namely a Hewlett-Packard Draftmaster plotter, for example. This plotter has a pencil carousel comprising up to two groups of consecutively numbered pencils, and each group can have different lead diameters. The pencils may be grouped by lead diameter for programming ease and the pencil grouping may also be selected from a front control panel of the plotter. An adjustment on the carousel selects the number of pencils in each group and the locations of the groups in the carousel. The carousel also specifies the desired writing force for each group. Pencil speed is generally set to a rate of 60 centimeters per second, but the user may reprogram the pencil speed. Pencils are selected from the carousel in order to plot. The plotter is designed to automatically pick another pencil from the same group if the currently used pencil runs out of lead. Groups are normally categorized by different lead diameters, but they could be categorized by the hardness of the lead or color, for example, if these were desired.

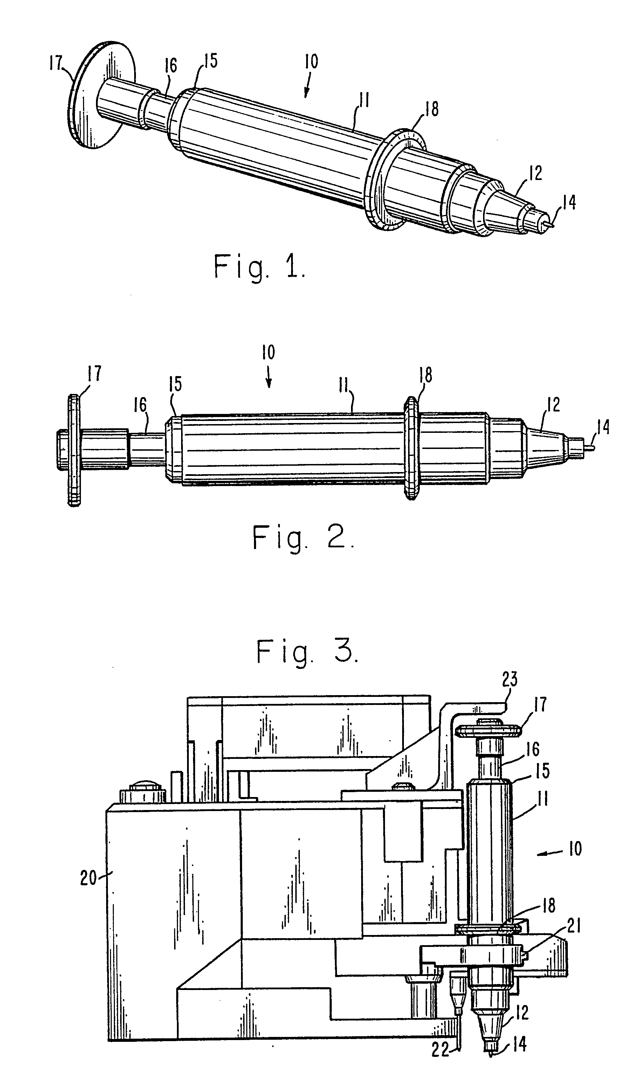

Referring now to the drawing figures, Fig. 1 is a perspective view of a mechanical pencil 10 in accordance with the present invention for use in a digital plotter. Fig. 2 is a side view of the pencil, and Fig. 3 shows the pencil 10 mounted in a carriage 20 of the digital plotter. The pencil 10 is provided with an external body 11 which may be molded or machined plastic. At one end of the body 11 is a conical tip 12 having an opening through which pencil lead 14 protrudes. The pencil lead 14 extends a predetermined distance beyond the end of the tip 12. The length of the protruding lead is from about 0.1 mm to about 1.0 mm.

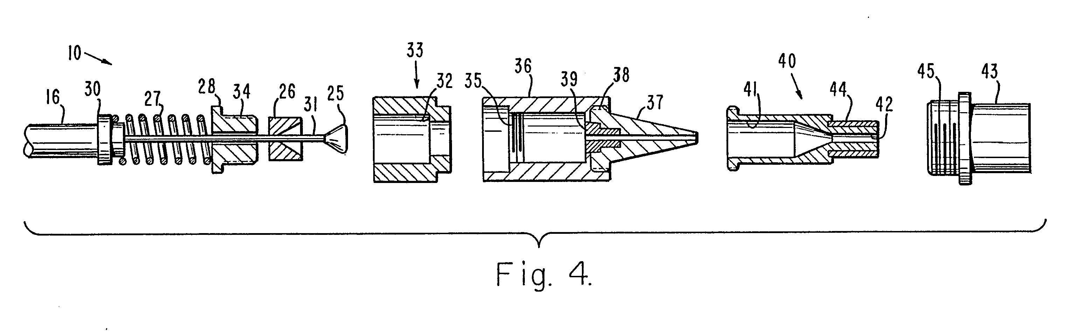

At the upper end of the body 11 there is provided a body cap 15. An inner pipe 16 extends through an opening in the body cap 15, and serves as a plunger to operate the pencil lead advance mechanism. This mechanism may be a conventional pencil lead advance mechanism such as that identified by reference numerals 25-39 in Fig. 4. The body cap 15 serves to limit the lateral motion of the inner pipe 16. The inner pipe 16 is hollow to permit the passage of pencil lead 14 therethrough. A flat, cylindrical knocking member or disk 17 is affixed to the upper end of the inner pipe 16, and is provided with a central hole or opening for the passage of pencil lead 14.

The body 11 is provided with a flange 18 for registration of the pencil 10 within a carriage 20 (Fig. 3) of the digital plotter (not shown). With reference to Fig. 3, the carriage 20 is provided with a pencil grip 21 for holding the pencil 10 after removing it from the carousel (not shown). The carriage 20 is also provided with a Z-axis encoder sensor (not shown) to which an extension 22 is connected. The extension 22 has two purposes. The first is to measure the vertical location of the media on the platen and the second is to act as a vertical reference for measuring the pencil length. Encoder output data is compared to a predetermined threshold which triggers a lead advance cycle. The Z-axis encoder sensor continuously monitors lead length so that compensation may be automatically made for variations in lead usage caused by factors such as pencils with different lead diameter and media-lead abrasion characteristics.

One method of lead advance employed with the present invention is described below with reference to Fig. 3. Initially, a pencil 10 is loaded into the carriage 20, and the carriage 20 is positioned at the edge of a measurement plate (not shown). The pencil 10 is positioned such that the tip 12 rests on the edge of the plate while the protruding lead 14 extends below the edge of the plate. The pencil 10 is tapped against the plate in order to seat the flange 18 and to set the position of the pencil 10 in the carriage. The Z-axis height of the pencil 10 is read to determine the length of pencil. From then on, the lead length is equal to the vertical sensor location minus the pencil length minus the vertical platen location. This is also done after every pencil-down operation, and periodically while the pencil 10 is down. If the lead length falls below a predetermined threshold value, the plotter suspends plotting operations currently in progress and advances the lead 14 in the pencil 10.

The relative location of the media is determined by placing a sheet of media on the platen, then placing the extension 22, which comprises a vertical position sensing member, onto the sheet of media. Then, the relative vertical position of the sheet of media is measured at a plurality of predetermined locations along one dimension thereof (the horizontal axis) using the vertical axis encoder. These vertical position measurements are stored for future use in calculating the lead length.

The predetermined threshold value is determined by placing the extension 22 on the measurement plate and measuring the vertical position of the extension 22 using the vertical axis encoder. A pencil 10 is chosen and it is placed on the plate such that the tip 12 rests thereon without lead interference. The vertical position of the pencil 10 is measured using the vertical axis encoder, and the two measured values are subtracted and the difference value is stored. Then, during a writing operation, as the pencil 10 is moved across the media, the lead advance threshold value is calculated by adding the stored difference value to the stored media vertical position and this calculated threshold is compared to the current vertical axis encoder value. If the calculated threshold value is less than a predetermined value, the length of the lead 14 is advanced.

The lead advance operation is performed in conjunction with a stopper, or bumper fork 23 disposed on the carriage 20 above the knocking disk 17 of the pencil 10. The pencil grip 21 raises the pencil 10 until the knocking disk 17 contacts the bumper fork 23. This causes the inner pipe 16 to act as a plunger and operate the pencil lead advance mechanism within the body 11. The lead 14 is then advanced, and the pencil grip 21 lowers the pencil 10 to the plotting media.

The lead advance process proceeds as follows. (a) The Z-axis encoder sensor is read to determine the height of the pencil 10 after it is brought in contact with the plotting media and during the writing operation to determine the length of lead 14 protruding from the pencil 10. (b) If the length of the lead 14 falls below a predetermined threshold value, the writing operation is suspended and the pencil 10 is raised to push the knocking disk 17 against the bumper fork 23 causing more lead 14 to protrude from the pencil 10. (c) The pencil is then returned to the position at which the writing operation was suspended. (d) The Z-axis encoder sensor is again read to determine if the length of the lead 14 is greater than the predetermined threshold value. (e) If this is so, then the writing operation is resumed. (f) If not, the foregoing steps (b) through (d) are repeated. (g) If, after a predetermined number of tries, the length of the lead 14 is not greater than the predetermined threshold value, the pencil 10 is returned to the carousel and a new pencil is selected.

To summarize the above procedure, if the lead advance operation is successful, the lead length will have been restored to a length whose value is greater than the threshold. In that case, the plotting operation is resumed at the point at which it was interrupted. Otherwise, the lead advance operation is retried a number of times until it does succeed, or else the pencil 10 is assumed to have run out of lead 14. In the latter case, the pencil 10 is replaced in the carousel, and a new one is selected on the assumption that it contains a fresh stick of pencil lead 14. After an entire group of pencils has run out of lead, the user is prompted to put new lead into the pencils.

The geometric configuration of the bumper fork 23 is such that it allows other writing instruments or pens to be used in the computer-controlled plotter without coming into contact with the bumper fork 23.

To suspend plotting operations, the existing smooth curve reference generator, sometimes referred to as the curvy servo was modified. Heretofore, once a vector was scheduled for plotting, it was required that the plotting proceed to its conclusion. A curve may be considered to be composed of a plurality of consecutive vectors. In order to suspend the plotting of a vector or a curve, the reference generator must decelerate, mid-vector or mid-curve, to a complete stop before beginning the lead advance process. The plotter may traverse several small vectors before coming to a complete stop. Following a successful lead advance, plotting operation is resumed at the point it was interrupted, and a partially drawn vector will be completed.

Fig. 4 is an enlarged exploded view of a different embodiment of the pencil 10, as modified to permit the pencil 10 to accommodate small diameter lead. The mechanism of Fig. 4 normally cannot be seen except for the plunger-like inner pipe 16 which extends out of one end of the body 11 through the cap 15. A jaw member or collet 25 is provided to secure the lead 14 during writing operations. A closely-fitting locking cup 26 is used to close the collet 25 in a tight grip. The locking cup 26 is spring-loaded with a coil spring 27 which applies pressure to a threaded member 28 having a recessed opening in which the cup 26 is seated. The other end of the spring 27 seats against a cylindrical shoulder 30 which is rigidly affixed to the hollow shaft 31 of the collet 25. The plunger-like inner pipe 16 is affixed to the other side of the cylindrical shoulder 30 so that when it is pressed, or operated, it moves the advance mechanism toward the cylinder 36.

The threaded member 28 engages a lip 32 in the interior of a cylindrical plastic spacer 33 with the threaded portion 34 extending therethrough to engage a first set of internal threads 35 in a cylinder 36. When the lead advance mechanism is operated and the collet 25 is unlocked and opens its grip, the collet 25 moves into the farthest part of the cylinder 36. Adjacent the collet 25 there is disposed an elongated lead support 37 affixed to the interior of the cylinder 36 but leaving room for a second set of internal threads 38. The elongated lead support 37 is shown as having a tapered or conical external configuration and an internal bore of fine dimension for supporting lead 14, although other external configurations may be used, if desired.

A slidable floating collar 40 has an interior bore 41 contoured to match the conical exterior of the elongated lead support 37. The other end of the slidable floating collar 40 may have a ceramic cylinder 44 affixed thereto, and fine internal bore 42 to support the lead 14. The slidable floating collar 40 slides within a closely fitted hollow sleeve 43 which is provided with external threads 45 that engage the second set of internal threads 38 of the cylinder 36.

The purpose of element 37 is to support the lead 14 as closely as possible to the floating collar 40 to eliminate breakage of the lead 14 internal to the pencil 10. A resilient grommet 39 is disposed in a recess provided in the interior of the lead support 37. When the collet 25 releases its grip, the lead 14 is held tightly by the resilient grommet 39.

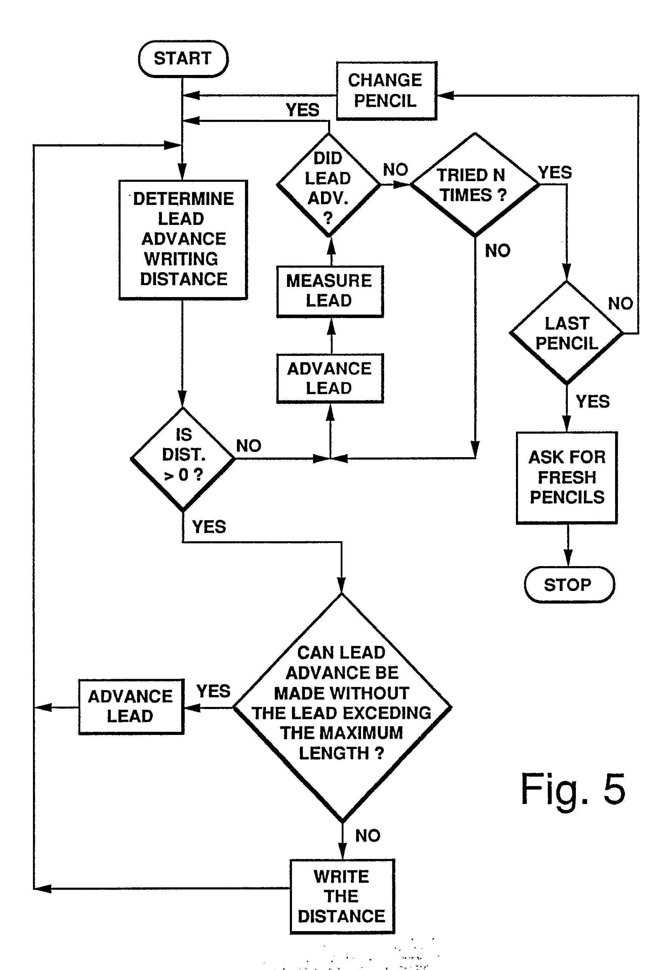

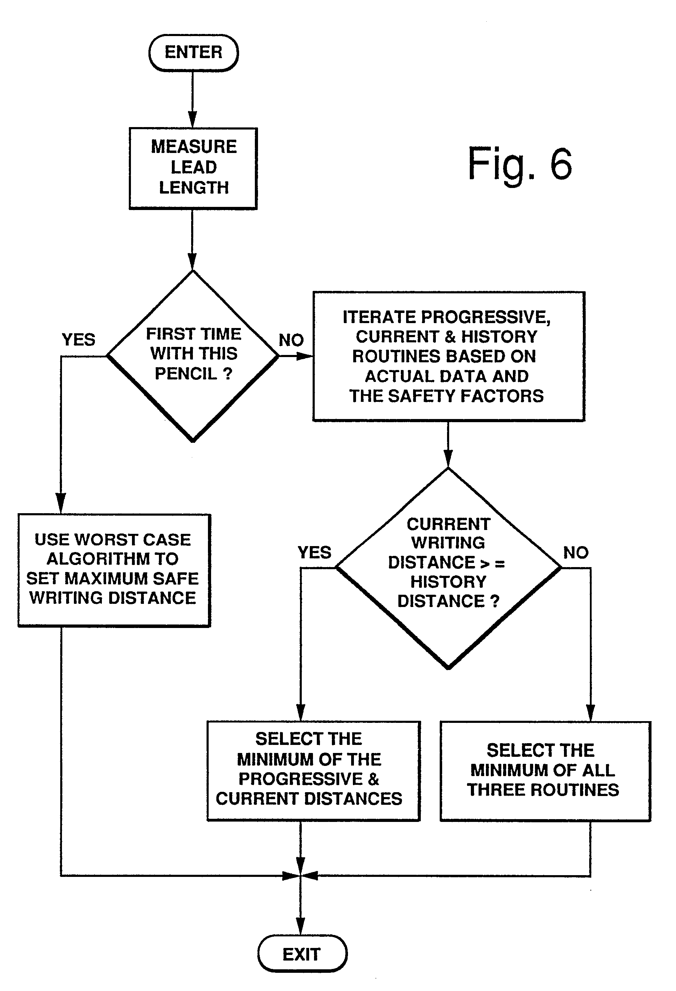

Figs. 5 and 6 illustrate an alternative algorithm for determining lead advance writing distance and providing for lead advance in the pencil 10. The algorithm provides a closed loop control for pencil lead usage. The algorithm ensures that (1) lead is always protruding from the pencil 10 so that all pencil down moves draw lines on the media, (2) that the lead length does not get too long so that it breaks during writing, and (3) that the highest drawing efficiency is achieved.

When drawings are made under the most abrasive conditions, the lead usage can be one thousand times the lead usage for the least abrasive conditions. This large dynamic range of lead usage requires the use of such an algorithm. The algorithm employs six routines with startup, progressive, current, historical, lead advance OK and lead advance failure controls. These six routines allow the algorithm to accurately predict and control future lead usage. This prediction significantly increases throughput efficiency by reducing the number of in process measurements made for the lead length. Because of the time required for software controlled measurement of lead length, the time required to plot a drawing can be increased by as much as 40%. Therefore, an algorithm which can accurately predict lead usage has the possibility of saving up to 40% of the plotting time.

The worst case startup routine is employed each time a new pencil is chosen. It assumes that the pencil contains the softest lead of the smallest diameter and that the plotter is writing with the highest pencil force on the most abrasive media. This routine uses the current lead length to calculate the maximum safe distance that can be written before measuring the lead length again. If the original distance is zero, it does a lead advance and then recalculates the safe distance. The benefit of this routine is that it selects a very small writing distance which will not use up all the lead. The limitation of this routine is that it selects a writing distance which might make plotting unnecessarily slow.

The progressive routine progressively lengthens the writing distance. This routine uses the worst case startup distance as a seed. Every time that the lead measurement is made, it doubles the writing distance before the next measurement. This routine starts with the writing distance used for the highest lead usage situation and iterates to the lowest usage situation, after only ten writing distance and measurement cycles. The benefit of the progressive routine is that it quickly and safely increases the writing distance, while the limitation is that it would continuously expand the writing distance to infinity.

The current lead usage routine uses actual writing distance and actual lead usage to predict future lead usage. In general, any order polynomial for any nonlinear function of the parameters may be employed. However, if several assumptions are made, and for ease of explanation, the computation performed by the algorithm can be reduced to a first order linear equation. Then a safety factor "S" is employed to eliminate the nonlinear variations in lead usage. The lead is assumed to be uniform in diameter and hardness. The pencil down force is assumed constant. The media is assumed to be uniformly abrasive. The lead usage is assumed to be independent of velocity. The lead usage is then proportional to writing distance.

If the writing distance is "D" meters and the lead length is "L" millimeters, then $D = S*K*L$, where "K" is a constant of proportionality. Therefore, the current writing distance is calculated by multiplying the current lead length by the safety factor and the current value of the constant. Every time the lead usage is measured, the constant is recalculated, using all the data since the last lead advance. The current lead usage constant is set to zero after each lead advance.

The benefits of this routine are that it controls the maximum writing distance and that it allows for changing conditions. The limitation of this routine is that it can make errors in calculating the coefficients of the lead usage functions. When the lead usage is very small, the resolution and accuracy of the lead length measurements interfere with calculating the exact value of the proportionality constant. At these times, the constant can be calculated to have a value of infinity. This implies the ability to write without using any lead.

The historical lead usage routine updates its coefficients of the algorithm with each lead advance. Because the first lead advance can occur as soon as a pencil is selected or after a very short writing distance, the uncertainty of plus or minus one half of a lead length measurement unit can be large. Therefore, this routine does not update the coefficients unless two units of lead have been used. Every time a lead ad vance occurs, the algorithm's history coefficients are updated. The benefit of this routine is that it provides a slowly changing average of the lead usage. The limitations are that since it does not start with any history and its values change by a slow integration process, and near startup, it may contain less data than the current routine.

Both the current and historical routines have separate coefficients for their respective polynomial functions. They each update their respective individual coefficient values of K. None of the other routines calculate lead usage.

The lead advance OK routine improves throughput because it allows a lead advance before the lead advance required point is reached. The longest desired lead length can be determined in two ways. One, the value can be programmed into software, or two, before the pencils are placed in the carousel, the lead is advanced to its longest length. The plotter assumes that this is the longest length that the user wants for the lead protrusion. From the original value, the longest possible lead advance is subtracted, giving the lead advance OK length. If the measured length of the lead is less than the lead advance OK length, a lead advance is performed.

Because of the safety factor, many measurements are made as the lead length asymptotically approaches the lead advance point. Several other routines protect against running out of lead. This routine requires only one lead length measurement for each writing cycle, if two conditions are met. One, if there is a large distance between the lead advance OK length and the lead advance required length. Two, the safety factor is close to unity, so that the first measurement falls between the lead advance OK length and the lead advance required length. The benefit of this routine is a reduction in the number of lead length measurements and the associated increase in plotting speed. The limitation of this routine is that it has no predicting capability.

The lead advance failure routine checks for completion of lead advance or an out of lead condition. There are many mechanical and electrical contributions to a lead advance. It has been found that lead advances are not nearly 100% reliable. After each lead advance attempt, the new lead length is compared to the length before the advance. If the difference is less than a predetermined value, another lead advance is initiated. After a number of retries, the pencil is assumed to be out of lead, or incapable of advancing lead. Then, a new pencil is selected and plotting continues. The benefit of this routine is that the lead advance loop has more than one chance to accomplish its task. This routine is limited by the number of pencils in the current pencil group in the carousel.

Thus, there has been described a novel pencil for a digital plotter, and methods for automatically advancing the lead in a mechanical pencil. The pencil body has a flange extending around its circumference that is employed to grip and register the pencil in the plotter. A spring advance mechanism is disposed in the lower portion of the pencil body. A knocking disk arrangement disposed at the upper portion of the pencil body includes a tube member coupled to the spring advance mechanism to permit remote operation thereof. The pencil allows 100% of the available down force provided by the plotter to be exerted on the pencil lead.

In the preferred lead advance method, a Z-axis encoder sensor of the existing computer-controlled plotter is adapted to use the above cited mechanical pencil. A Z-axis (vertical axis) encoder sensor of the existing plotter is calibrated and is used to measure the length of lead in the pencil during writing operations. If the lead length falls below a predetermined threshold, the plotter suspends the plotting operation currently in progress and advances the lead in the pencil. After the lead-advancing operation has been satisfactorily concluded, the plotting operation is resumed at the point at which it was interrupted.

In a second embodiment of the pencil, the pencil tip is modified to permit the use of very small diameter lead. This pencil arrangement employs an improved floating collar comprising a slidable tube closely fitted to the pencil body that supports the small diameter lead during writing operations. In addition, an inner tube also supports the lead as closely as possible to the floating collar so that the lead does not break inside the pencil. The floating collar lead support may have a ceramic outer sheath to minimize the abrasive wearing down of the pencil lead by the writing medium. This close fitting arrangement minimizes lead breakage by supporting small diameter lead. The collar floats up as the lead is used. When a lead advance occurs, the collar extends itself. Therefore, the distance the lead protrudes from the pencil is always relatively small. The short length of protruding lead is an inherently strong structure and prevents the lead from bending and breaking.

In a second alternative method, a lead advance algorithm employing a variety of lead advance routines monitors and controls the lead dispensing process. The algorithm employs six routines which allow the algorithm to accurately predict and control future lead usage.

It is to be understood that the above-described embodiments of the invention are merely illustrative of the many possible specific embodiments which represent applications of the principles of the present invention. Numerous and varied other arrangements can be readily devised in accordance with these principles by those skilled in the art without departing from the scope of the invention.

**Claims**

1. Automatic lead advance of a mechanical pencil carried by a plotter, said automatic lead advance comprising:

(a) a plotter carriage having a pencil grip, a bumper fork, and vertical axis encoder sensor means for determining the vertical position of the pencil grip relative to a writing surface of the plotter; and

(b) a mechanical pencil gripped by the carriage, and having an inner pipe and a knocking disk coupled in operative relation to advance lead in the pencil when the knocking disk impacts the bumper fork;

(c) the vertical axis encoder sensor means measuring the vertical distance of the pencil relative to the writing surface of the plotter and comparing the measured distance to a predetermined threshold, and suspending the plotting operation and moving the pencil to push the knocking disk against the bumper fork and hence advance lead contained therein, and to then continue the suspended plotter operation.

2. A mechanical pencil for use in a plotter, said pencil comprising:
a body having a tip at one end thereof and a cylindrical flange member disposed around the periphery of the body;
a spring loaded lead advance mechanism disposed within the body, and comprising jaw member means for securing the lead during writing operations and for releasing the lead to permit sliding thereof during lead advance operations, a member having an orifice therein adapted to slidably secure lead therein during lead advance operations; and
a knocking member and inner pipe arrangement disposed at the other end of the body and extending away from the tip, and adapted to open the jaw member means and advance the lead toward the tip.

3. The mechanical pencil of Claim 2 which further comprises:
a slidable floating collar disposed within the tip and having a cylindrical bore therein for supporting small diameter lead.

4. A method of controlling the writing operations of a mechanical pencil employed in a plotter, said method comprising the steps of:
determining the relative vertical location of the media on which writing is to be performed at a plurality of predetermined locations along one dimension of the media;
setting a predetermined threshold corresponding to a minimum acceptable lead writing length;
monitoring the length of lead protruding from the pencil by monitoring the relative vertical position of the pencil by means of a vertical axis encoder;
if the lead length drops below the predetermined threshold, suspending the drawing operation and advance the length of lead beyond the threshold; continuing the suspended drawing operation from the point where it was suspended.

5. The method of Claim 4 wherein the step of determining the relative location of the media comprises the steps of:
placing a sheet of media on a platen;
placing the vertical position sensing member onto the sheet of media; and
measuring the relative position of the sheet of media at a plurality of predetermined locations along one dimension thereof using the vertical axis encoder.

6. The method of Claim 4 wherein monitoring and advancing the length of lead further comprises the steps of:

(a) placing the vertical measurement member on a measurement plate;

(b) measuring the vertical position of the member using the vertical axis encoder;

(c) choosing a pencil and placing it on the plate such that the tip rests thereon without lead interference;

(d) measuring the vertical position of the pencil using the vertical axis encoder;

(e) subtracting the two measured values and storing the difference;

(f) during a writing operation, as the pencil is moved across the media, calculating the lead advance threshold value by adding the stored difference value to the stored media vertical position and comparing this calculated threshold to the current vertical axis encoder value; and

(g) if the calculated threshold value in (f) is less than a predetermined value, advance the length of the lead.

7. A method of controlling the writing operations of two or more mechanical pencils employed in a plotter, said method comprising the steps of:

(a) determining the distance that can be written before a lead advance operation should be performed;

(b) if the distance is greater than zero, determining if the lead can be advanced without exceeding a predetermined maximum length;

(c) if the lead cannot be advanced, write the distance and return to step (a);

(d) if the lead can be advanced without exceeding the predetermined maximum length, advance the lead and return to step (a);

(e) if the distance is less than or equal to zero, advance the lead, measure the lead length, and determine if the lead advanced;

(f) if the lead has been advanced, return to step (a);

(g) if the lead has not been advanced, repeat steps (e) and (f) a predetermined number of times;

(h) if step (g) has been performed the predetermined number of times, determine if the selected pencil is the last pencil in the group;

(l) if the selected pencil is not the last pencil, select a fresh pencil and return to step (a); and

(m) if the selected pencil is the last pencil, ask for fresh pencils, stop the plotting operation and wait for the user to replace the pencils.

8. The method of Claim 7 wherein the step of determining the distance to which lead is to be advanced comprises the steps of:

(a) determining the lead length;

(b) if the pencil has not been previously used, setting a maximum writing distance using a worst case algorithm;

(c) if the pencil has previously been used, setting a maximum writing distance by iterating progressive, current and history routines based on actual data and predetermined safety factors by determining if the current writing distance is greater than or equal to the history distance;

(d) if the current writing distance is greater than or equal to the history distance, selecting the minimum of the progressive and current distances as the maximum writing distance; and

(e) if the current writing distance is less than or equal to the history distance, select the minimum of the progressive, current and history distances as the maximum writing distance.

9. The automatic lead advance of Claim 1 wherein said mechanical pencil comprises:
a body having a tip at one end thereof and a cylindrical flange member disposed around the periphery of the body;
a spring loaded lead advance mechanism disposed within the body, and comprising jaw member means for securing the lead during writing operations and for releasing the lead to permit sliding thereof during lead advance operations, a member having an orifice therein adapted to slidably secure lead therein during lead advance operations; and
a knocking member and inner pipe arrangement disposed at the other end of the body and extending away from the tip, and adapted to open the jaw member means and advance the lead toward the tip.

10. The mechanical pencil of Claim 9 which further comprises:
a slidable floating collar disposed within the tip and having a cylindrical bore therein for supporting small diameter lead.

Fig. 1.

Fig. 2.

Fig. 3.

Fig. 4.

EP 0 384 590 A2

Fig. 5

**Fig. 6**

ENTER

↓

MEASURE
LEAD
LENGTH

↓

FIRST TIME
WITH THIS
PENCIL ?

— YES →

USE WORST CASE
ALGORITHM TO
SET MAXIMUM SAFE
WRITING DISTANCE

— NO →

ITERATE PROGRESSIVE,
CURRENT & HISTORY
ROUTINES BASED ON
ACTUAL DATA AND
THE SAFETY FACTORS

↓

CURRENT
WRITING
DISTANCE > =
HISTORY
DISTANCE ?

YES →

SELECT THE
MINIMUM OF THE
PROGRESSIVE &
CURRENT DISTANCES

NO →

SELECT THE
MINIMUM OF ALL
THREE ROUTINES

↓

EXIT